# EUROPÄISCHE PATENTSCHRIFT

(11) **EP 3 106 763 B1**
(45) Veröffentlichungstag und Bekanntmachung des Hinweises auf die Patenterteilung: **03.01.2018**
(21) Anmeldenummer: 15172541.3
(22) Anmeldetag: 17.06.2015
(51) Int. Cl.: F24D 17/00, F28D 1/06, F28D 20/00, F28D 20/02

(54) **WARMWASSERSPEICHERSYSTEM UND WARMWASSERVERSORGUNGANLAGE MIT EINEM WARMWASSERSPEICHERSYSTEM**
HOT WATER STORAGE SYSTEM AND HOT WATER SUPPLY INSTALLATION WITH A HOT WATER STORAGE SYSTEM
BALLON D'EAU CHAUDE SANITAIRE ET INSTALLATION DE DISTRIBUTION D'EAU CHAUDE DOTEE D'UN BALLON D'EAU CHAUDE SANITAIRE

(43) Veröffentlichungstag der Anmeldung: 21.12.2016
(73) Patentinhaber: H.M. Heizkörper GmbH & Co. KG, 37351 Dingelstädt (DE)
(72) Erfinder: Muhr, Christian, 37351 Kefferhausen (DE)
(74) Vertreter: Oppermann, Frank

(56) Entgegenhaltungen:
- EP-A2- 1 798 486
- EP-A2- 2 204 618
- DE-A1- 10 043 533
- DE-U1-202008 017 601
- US-A1- 2013 266 300

## Beschreibung

Die Erfindung betrifft ein Warmwasserspeichersystem mit einem druckfesten Speicherbehälter für Warmwasser und einem Solarwärme-Wärmetauscher für eine thermische Solaranlage. Darüber hinaus betrifft die Erfindung eine Warmwasserversorgungsanlage mit einer thermischen Solaranlage und einem derartigen Warmwasserspeichersystem.

Zur Bereitstellung von Warmwasser finden Warmwasserspeicher oder Boiler Verwendung. Es wird zwischen druckfesten und drucklosen Warmwasserspeichern unterschieden. Die druckfesten Warmwasserspeicher weisen einen von einem thermischen Isoliermantel umschlossenen Druckbehälter auf, der Teil eines geschlossenen Systems ist. In dem Druckbehälter wird das Wasser auf eine einstellbare Temperatur aufgeheizt. Bei mit einer externen Wärmequelle betriebenen Warmwasserspeichern ist im Druckbehälter ein Wärmetauscher angeordnet, der einen Vorlauf- und Rücklaufanschluss für eine von der Wärmequelle abgehenden Vorlaufleitung bzw. eine zu der Wärmequelle führende Rücklaufleitung aufweist. Die Druckbehälter der druckfesten Warmwasserspeicher müssen ausreichend dimensioniert sein, um dem Leitungsdruck standhalten zu können. Daher müssen die Wände der Druckbehälter eine ausreichende Wandstärke haben. Bei elektrisch betriebenen Warmwasserspeichern befindet sich im Druckbehälter eine elektrische Heizeinheit mit elektrischen Anschlüssen zum Anschluss der Photovoltaikanlage.

Wenn ein Warmwasserspeicher mit Solarenergie betrieben werden soll, stellt sich das Problem, dass eine ausreichende Menge an solarer Energie nicht immer zur Verfügung steht. In solarthermischen Anlagen finden daher zum Speichern von Solarenergie Latentwärmespeicher Verwendung, die über einen Behälter zur Aufnahme eines Phasenwechselmaterials verfügen. Das Phasenwechselmaterial (PCM) nutzt zum Speichern der solaren Wärme die Enthalpie reversibler thermodynamischer Zustandsänderungen aus. Ein bekanntes Phasenwechselmaterial ist beispielsweise Natriumacetat-Trihydrat, das eine hohe Schmelzenthalpie und einen relativ geringen Preis hat. Beim Laden des Latentwärmespeichers geht das Phasenwechselmaterial von einem festen Aggregatzustand in einen flüssigen Aggregatzustand über. Natriumacetat-Trihydrat beispielsweise wird bei einer Schmelztemperatur von 58°C verflüssigt. Beim Abkühlen bleibt das Salzhydrat als unterkühlte Schmelze in einem metastabilen Zustand flüssig. Wenn eine Kristallisation in der unterkühlten Schmelze ausgelöst wird, erwärmt sich das Salzhydrat auf eine Temperatur von 58°C, wobei die latente Wärme wieder freigegeben wird.

Ein Wärmespeichersystem für eine solarthermische Anlage ist aus der EP 2 273 226 A1 bekannt. Das Wärmespeichersystem umfasst eine Mehrzahl von Wärmespeicher-Behältern, die nacheinander aufgeladen oder entladen werden können. Die einzelnen Wärmespeicher-Behälter sind über ein Leitungssystem miteinander verbunden. Zur Steuerung des Zu- bzw. Abflusses des Wärmeträgermediums sind in den Zuführ- und Abführleitungen Ventile angeordnet, die von einer Steuereinheit angesteuert werden. Die Steuerung erlaubt eine Auf- bzw. Entladung der einzelnen Behälter.

Ein Wärmespeichersystem, das eine Mehrzahl von Latentwärmespeicher-Behälter umfasst, ist auch aus der DE 10 2012 024 211 A1 bekannt.

Wenn die bekannten Warmwasserspeicher mit einer solarthermischen Anlage betrieben werden, die über das oben beschriebene Latentwärmespeichersystem verfügt, kann Warmwasser auch in Zeiträumen bereitgestellt werden, in denen eine ausreichende Menge an Solarenergie nicht zur Verfügung steht. Nachteilig ist aber, dass eine Mehrzahl von Latentwärmespeicher-Behältem zur Verfügung stehen muss, woraus sich ein relativ großer technischer Aufwand ergibt. Daher wird auf eine Speicherung der Solarenergie bei der Wasseraufbereitung vielfach verzichtet und die solarbetriebenen Warmwasserspeicher werden mit einer Nachheizung ausgerüstet, die mit fossilen Brennstoffen oder elektrisch betriebenen wird.

Die EP 2 204 618 A2 beschreibt ein Warmwasserspeichersystem, das über einen inneren Behälter mit einem zylindrischen Querschnitt verfügt, der von einem äußeren Mantel mit einem quadratischen Querschnitt umgeben ist. Der Mantel wird durch mit einem Latentwärmespeichermaterial gefüllte Beutel aus Kunststoff- oder Metallfolie gebildet. Das Volumen des Mantels ist derart bemessen, dass eine im Verhältnis zu dem Volumen des inneren Behälters große Menge an Latentwärmespeichermaterial aufgenommen werden kann. Der innere Behälter und der Mantel sind von einer Wärmedämmung umgeben. Die Herstellung des Warmwasserspeichersystems erweist sich als relativ aufwendig. Die EP 2 204 618 A2 offenbart den Oberbegriff des Anspruchs 1. Der Erfindung liegt die Aufgabe zugrunde, ein solarbetriebenes Wärmespeichersystem zur Verfügung zu stellen, dass sich mit verhältnismäßig geringem technischem Aufwand realisieren lässt.

Die Lösung dieser Aufgabe erfolgt mit den Merkmalen des Patentanspruchs 1. Die abhängigen Ansprüche betreffen vorteilhafte Ausführungsformen der Erfindung.

Das erfindungsgemäße Warmwasserspeichersystem weist einen druckfesten Speicherbehälter für Warmwasser und einen Solarwärme-Wärmetauscher für den Betrieb des Warmwasserspeichersystems mit einer thermischen Solaranlage auf. Darüber hinaus weist das Warmwasserspeichersystem einen Warmwasser-Vorlaufanschluss und einen Warmwasser-Rücklaufanschluss auf. Über den Warmwasser-Vorlaufanschluss kann dem Speicherbehälter aufgewärmtes Wasser entnommen und über den Warmwasser-Rücklaufanschluss wieder zugeführt werden. Das Warmwasserspeicher system kann in einen Zirkulationskreislauf eingebunden werden.

Die Solarenergie wird bei dem erfindungsgemäßen Warmwasserspeichersystem in einem Phasenwechselmaterial eines Latentwärmespeichers gespeichert. Das Grundprinzip der Erfindung liegt darin, dass der Latentwärmespeicher Bestandteil des Warmwasserspeichersystems ist. Die Erfindung stellt daher nicht darauf ab, die Solarenergie in einer Mehrzahl von externen Latentwärmespeicher-Behältern zu speichern, die Teil einer Solaranlage sind. Folglich ist der mit der Erfindung verbundene technische Aufwand relativ gering ist. Das erfindungsgemäße Warmwasserspeichersystem kann somit kostengünstig zur Verfügung gestellt werden.

Ein wesentlicher Aspekt der Erfindung liegt darin, dass der Latentwärmespeicher sich nicht innerhalb des druckfesten Speicherbehälters für Warmwasser befindet, sondern den Speicherbehälter von außen umschließt. Es hat sich gezeigt, dass ein innerhalb des Speicherbehälters angeordneter Latentwärmespeicher bei nicht ausreichender Dimensionierung dem Druck im Speicherbehälter nicht standhalten kann. Der den Speicherbehälter umschließende Latentwärmespeicher hingegen braucht nicht druckfest zu sein, so dass sich die Herstellung des Warmwasserspeichersystems vereinfacht. Da der Latentwärmespeicher den Speicherbehälter umschließt, ist dennoch ein ausreichender Wärmeübergang der gespeicherten Wärme auf das im Speicherbehälter befindliche Wasser oder umgekehrt gewährleistet.

Der Latentwärmespeicher zum Speichern von Solarenergie und der Speicherbehälter für Warmwasser sind zur Wärmedämmung vorzugsweise von einem einstückigen thermischen Isoliermantel, insbesondere einem Isoliermantel aus Polyurethan, vollständig umschlossen. Das Isoliermaterial kann beispielsweise aufgespritzt werden. Es ist aber auch grundsätzlich auch möglich, den Isoliermantel mehrteilig auszubilden.

Der Speicherbehälter für Warmwasser ist ein zylindrischer Druckbehälter, wobei der Latentwärmespeicher den zylindrischen Druckbehälter zumindest über einen Teil seiner Länge konzentrisch umschließt. Ein zylindrischer Druckbehälter kann mit verhältnismäßig geringen Kosten hergestellt werden. Der Druckbehälter kann aber auch jede andere Form haben, beispielsweise kastenförmig ausgebildet sein.

Die Außenwand des zylindrischen Speicherbehälters wird von einem hohlzylindrischen Körper zumindest über einen Teil seiner Länge unter Bildung eines abgeschlossenen Zwischenraums konzentrisch umschlossen, wobei der Zwischenraum zwischen der zylindrischen Außenwand des Speicherbehälters und dem hohlzylindrischen Körper mit einem Phasenwechselmaterial befüllt ist. Der hohlzylindrische Körper braucht eine nur verhältnismäßig geringe Wandstärke zu haben, da in dem Zwischenraum nicht der Druck herrscht, dem der Speicherbehälter für Warmwasser ausgesetzt ist. Folglich kann das erfindungsgemäße Warmwasserspeichersystem mit verhältnismäßig geringem technischem Aufwand auf der Basis der bekannten Warmwasserspeicher hergestellt werden.

Das Volumen des Speicherbehälters für Warmwasser und das Volumen des mit dem Phasenwechselmaterial befüllten Zwischenraums in einem Verhältnis von 3 bis 6, insbesondere 4 und 5 als vorteilhaft erweist. Bei einem derartigen Volumenverhältnis kann eine in der Praxis im Allgemeinen ausreichende Menge an Solarenergie gespeichert werden.

Das Warmwasserspeichersystem weist einen Solarwärme-Wärmetauscher für eine thermische Solaranlage auf, der einen Wärmeträger-Vorlaufanschluss zum Zuführen eines Wärmeträgers von der thermischen Solaranlage und einen Wärmeträger-Rücklaufanschluss zum Abführen des Wärmeträgers aufweist.

Die Nachheizung-Wärmequelle kann eine mit fossilen Brennstoffen betriebene Heizung sein. Die Nachheizung kann aber auch mit einer elektrischen Heizeinheit erfolgen. Hierzu können eine oder mehrere elektrische Heizelemente in dem Speicherbehälter für Warmwasser vorgesehen sein.

Der Solarwärme-Wärmetauscher und der Nachheizung-Wärmetauscher können unterschiedlich ausgebildet sein. Vorzugsweise sind die Wärmetauscher im Speicherbehälter angeordnete Rohrwendel-Wärmetauscher.

Der Latentwärmespeicher umschließt den Speicherbehälter für Warmwasser vorzugsweise nicht vollständig, sondern nur teilweise bis auf einen unteren Abschnitt im Bereich des Bodens des Speicherbehälters. In dem untern Abschnitt des Speicherbehälters, der nicht von dem Latentwärmespeicher umschlossen wird, sind der Warmwasser-Vorlaufanschluss, Warmwasser-Rücklaufanschluss, Wärmeträger-Vorlaufanschluss und Wärmeträger-Rücklaufanschluss angeordnet. Dies hat den Vorteil, dass der Latentwärmespeicher nicht von den Anschlüssen durchdrungen werden muss.

In dem unteren Abschnitt des Speicherbehälters, der nicht von dem Latentwärmespeicher umschlossen wird, ist eine mit einem abnehmbaren Deckel verschlossene Wartungsöffnung vorgesehen. Die erfindungsgemäße Warmwasserversorgungsanlage weist eine thermische Solaranlage und das erfindungsgemäße Warmwasserspeichersystem auf. Die Warmwasserversoigungsanlage kann noch über sämtliche Komponenten der bekannten Warmwasserversorgungsanlagen verfügen, beispielsweise Mischer, Zirkulationspumpen, Rückschlagventile etc..

Im Folgenden wird die Erfindung unter Bezugnahme auf die Zeichnungen näher erläutert. Es zeigen:
- Fig. 1: die erfindungsgemäße Warmwasserversorgungsanlage in vereinfachter schematischer Darstellung,
- Fig. 2: einen ersten Schnitt durch das erfindungsgemäße Warmwasserspeichersystem der Wannwasserversorgungsanlage von Fig. 1,
- Fig. 3: einen zweiten Schnitt durch das erfindungsgemäße Warmwasserspeichersystem der Warmwasserversorgungsanlage von Fig. 1 und
- Fig. 4: einen dritten Schnitt durch das erfindungsgemäße Warmwasserspeichersystem der Warmwasserversorgungsanlage von Fig. 1.

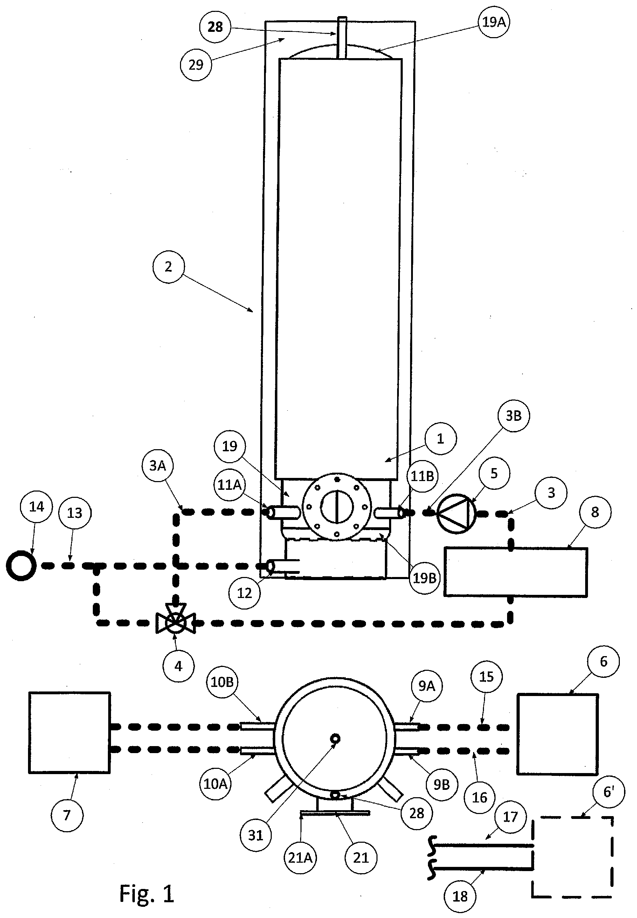

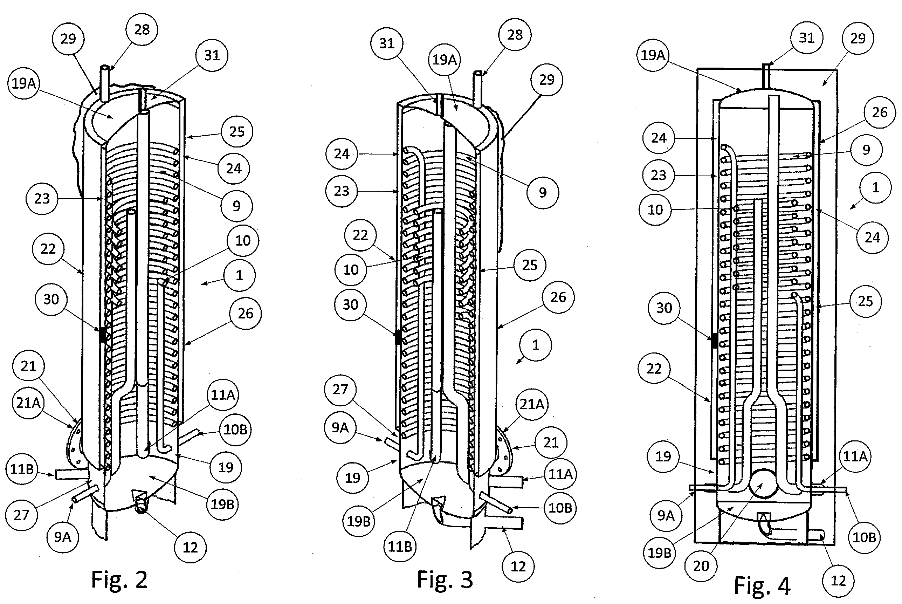

Fig. 1 zeigt in stark vereinfachter schematischer Darstellung die wesentlichen Komponenten der erfindungsgemäßen Warmwasserversorgungsanlage. In Fig. 1 ist das Warmwasserspeichersystem 1 der Warmwasserversorgungsanlage 2 in der Seitenansicht und der Draufsicht dargestellt. Die einzelnen Komponenten des Warmwasserspeichersystems 1 sind in den Figuren 2 bis 4 dargestellt.

Die Warmwasserversorgungsanlage 2 umfasst das erfindungsgemäße Warmwasserspeichersystem 1, einen Zirkulationskreislauf 3 mit einem Mischer 4 und einer Zirkulationspumpe 5, eine thermische Solaranlage 6 und eine optionale Nachheizungs-Wärmequelle 7, beispielsweise einen Öl- oder Gasbrenner, sowie mehrere Entnahmestellen 8.

Das Warmwasserspeichersystem 1 verfügt über einen Solarwärme-Wärmetauscher 9, der einen Wärmeträger-Vorlaufanschluss 9A und einen Wärmeträger-Rücklaufanschluss 9B zum Anschluss der thermischen Solaranlage 6 aufweist, und einen optionalen Nachheizung-Wärmetauscher 10, der einen Nachheizung-Vorlaufanschluss 10A und einen Nachheizung-Rücklaufanschluss 10B zum Anschluss der Nachheizungs-Wärmequelle 7 aufweist. Anstelle von oder zusätzlich zu einem Nachheizung-Wärmetauscher kann das Warmwasserspeichersystem auch über eine in Fig. 1 nicht dargestellte elektrische Heizeinheit verfügen, wenn die Nachheizung mit elektrischer Energie betrieben werden soll.

An einen Warmwasser-Vorlaufanschluss 11A des Warmwasserspeichsystems 1 ist die Vorlaufleitung 3A des Zirkulationskreislaufs 3 angeschlossen, und an einen Warmwasser-Rücklaufanschluss 11B ist die Rücklaufleitung 3B des Zirkulationskreislaufs 3 angeschlossen. Das Warmwasserspeichersystem 1 weist einen Kaltwasseranschluss 12 auf, der über eine Kaltwasserleitung 13 mit dem Hausanschluss 14 verbunden ist. Dem Zirkulationskreislauf 6 kann über den Mischer 5 Kaltwasser zugeführt werden. Das Warmwasser wird in dem Zirkulationskreislauf 6 mit der Zirkulationspumpe 5 gefördert.

Die Vorlaufleitung 15 der thermischen Solaranlage 7 ist an den Wärmeträger-Vorlaufanschluss 10A und die Rücklaufleitung 16 der Solaranlage 6 an den Wärmeträger-Rücklaufanschluss 10B angeschlossen, so dass das Wasser in dem Warmwasserspeichersystem 1 mit Solarenergie auf die gewünschte Temperatur aufgeheizt werden kann. Mit der optionalen Nachheizungs-Wärmequelle 7 kann optional nachgeheizt werden.

Das Warmwasserspeichersystem 1 kann zusätzlich zu der thermischen Solaranlage 6 eine in Fig. 1 in gestrichelten Linien dargestellte Photovoltaikanlage 6' aufweisen, die über Stromleitungen 17, 18 an die elektrischen Anschlüsse einer in Fig. 1 nicht dargestellten elektrischen Heizeinheit angeschlossen ist, die zusätzlich zu dem Solarwärme-Wärmetauscher 9 in dem Warmwasserspeichersystem vorgesehen ist.

Nachfolgend wird das Warmwasserspeichersystem unter Bezugnahme auf die Figuren 2 bis 4 im Einzelnen beschrieben.

Das Warmwasserspeichersystem 1 weist einen druckfesten Speicherbehälter 19 auf. Der Speicherbehälter19 ist ein zylindrischer Druckbehälter, der einen Deckelteil 19A und eine Bodenteil 19B aufweist. Vorzugsweise besteht der Speicherbehälter aus Edelstahl. Die Wandstärke des Edelstahlbehälters ist derart bemessen, dass der Behälter dem gewünschten Druck, beispielsweise bis zu 10 bar, in dem geschlossenen System standhält. Der Speicherbehälter 19 hat ein Fassungsvolumen, das bei dem vorliegenden Ausführungsbeispiel zwischen 160 und 180 1 liegt. In dem Inneren des Speicherbehälters 19 befindet sich der Solarwärme-Wärmetauscher 9 für den Betrieb mit einer thermischen Solaranalage 6 bzw. eine nur andeutungsweise dargestellte elektrische Heizeinheit 20 für den Betreib mit einer Photovoltaikanlage 6' und der optionale Nachheizung-Wärmetauscher 10. Der Solarwärme-Wärmetauscher 9 und der Nachheizung-Wärmetauscher 10 sind vorzugsweise Rohrwendel-Wärmetauscher. Die Wärmetauscher 9, 10 können aber auch Platten-Wärmetauscher sein. Warmwasser-Vorlaufanschluss 11A, Warmwasser-Rücklaufanschluss 11B, Kaltwasseranschluss 14, Wärmeträger-Vorlaufanschluss 9A und Wärmeträger-Rücklaufanschluss 9B sowie Nachheizung-Vorlaufanschluss 10A und Nachheizung-Rücklaufanschluss 10B befinden sich am Bodenteil 19B des Speicherbehälters 19, an dem auch eine Wartungsöffnung 21 vorgesehen ist, die mit einem abnehmbaren Deckel 21A druckdicht verschlossen ist (Fig. 1).

Darüber hinaus weist das Warmwasserspeichersystem 1 einen Latentwärmespeicher 22 zum Speichern der solaren Wärme in einem Phasenwechselmaterial (PCM) auf, der den Speicherbehälter 19 umschließt. Das Phasenwechselmaterial 23 befindet sich in einem an der Ober- und Unterseite abgedichteten Zwischenraum 24 zwischen einem hohlzylindrischen Körper 25, der die Außenwand 26 des zylindrischen Speicherbehälters 19 konzentrisch umschließt, und der Außenwand 26 des Speicherbehälters 19. Bei dem vorliegenden Ausführungsbeispiel erstreckt sich der Zwischenraum 24 zur Aufnahme des Phasenwechselmaterials 23 von dem Deckelteil 19A bis zu einem unteren Abschnitt 27, der den Bodenteil 19B des Speicherbehälters 19 umfasst. Allein entscheidend ist, dass sich der Latentwärmespeicher 22 nicht im Inneren des Speicherbehälters für Warmwasser, sondern außerhalb des Speicherbehälters befindet, wobei der Latentwärmespeicher aber Bestandteil des Warmwasserspeichersystems ist.

Der Zwischenraum 24 hat ein Füllvolumen, das bei dem vorliegenden Ausführungsbeispiel zwischen 30 und 60 1 liegt. Der Latentwärmespeicher 22 kann über eine am Deckelteil 19A des Speicherbehälters vorgesehene Öffnung 28 befüllt werden (Fig. 1).

Zur Wärmeisolation werden der Latentwärmespeicher 22 und der Speicherbehälter 19 für Warmwasser von einem thermischen Isoliermantel 29, insbesondere aus Polyurethan, vollständig umschlossen, der aus nur einem Stück besteht. Vorzugsweise werden die Gehäuseteile mit einem Isolationsmaterial vollständig umspritzt. In den Figuren ist der Isoliermantel nur andeutungsweise oder ausschnittsweise dargestellt.

Die Anordnung des Latentwärmespeichers 22 außerhalb des Speicherbehälters 19 hat den Vorteil, dass der Latentwärmespeicher nicht einem hohen Innendruck standhalten muss. Der hohlzylindrische Körper 25 kann eine geringere Wandstärke als die Außenwand 26 des Speicherbehälters 19 aufweisen, da der Raum zur Aufnahme des Phasenwechselmaterials 23 nicht unter hohem Druck steht. Vorteilhaft ist auch, dass mit Ausnahme des von den Wärmetauschern 9, 10 eingenommen Volumens das gesamte Volumen des Speicherbehälters 19 für das Warmwasser zur Verfügung steht. Die Wärmetauscher 9, 10 können daher in dem Speicherbehälter 19 ohne Rücksicht auf weitere Komponenten frei angeordnet werden.

Über die Außenwand 26 des Speicherbehälters 19 steht das Phasenwechselmaterial in einem guten thermischen Kontakt zu dem Warmwasser, das von der thermischen Solaranlage 6 aufgeheizt wird, so dass die überflüssige Wärmeenergie in dem Phasenwechselmaterial 23 gespeichert und nach Bedarf über die Außenwand 26 des Speicherbehälters 19 wieder an das Wasser in dem Speicherbehälter abgegeben werden kann.

Für die Abgabe der gespeicherten Solarenergie wird der Latentwärmespeicher 22 entladen. Hierzu verfügt das Warmwasserspeichersystem 1 über eine nur ndeutungsweise dargestellte Vorrichtung 30 zur Auslösung einer Kristallisation in der unterkühlten Schmelze. Die Auslösevorrichtung 30 kann von einer nicht dargestellten Steuereinheit in Abhängigkeit von bestimmten Zuständen des Phasenwechselmaterials in bekannter Weise angesteuert werden. Zur Erfassung der Temperatur des Phasenwechselmaterials beispielsweise kann das Warmwasserspeichersystem über Temperatursensoren verfügen, die am Speicherbehälters 19 in Muffen 31 sitzen können (Fig. 1).

## Patentansprüche

1. Warmwasserspeichersystem mit
einem druckfesten Speicherbehälter (19) für Warmwasser, der ein zylindrischer Druckbehälter ist,
einem Warmwasser-Vorlaufanschluss (11A) und einem Warmwasser-Rücklaufanschluss (11B),
einem Solarwärme-Wärmetauscher (9) für eine thermische Solaranlage (6), der einen Wärmeträger-Vorlaufanschluss (9A) zum Zuführen eines Wärmeträgers von der thermischen Solaranlage (6) und einen Wärmeträger-Rücklaufanschluss (9B) zum Abführen des Wärmeträgers aufweist,
einem den Speicherbehälter (19) für Warmwasser zumindest teilweise umschließenden Latentwärmespeicher (22) zum Speichern von Solarenergie in einem Phasenwechselmaterial (23), wobei der Latentwärmespeicher den zylindrischen Druckbehälter zumindest über einen Teil seiner Länge, bis auf einen unteren Abschnitt (27) konzentrisch umschliesst, wobei der Warmwasser-Vorlaufanschluss (11A), Warmwasser-Rücklaufanschluss (11B), Wärmeträger-Vorlaufanschluss (9A) und Wärmeträger-Rücklaufanschluss (9B) in dem unteren Abschnitt (27) des Speicherbehälters (19) für Warmwasser angeordnet sind, der nicht von dem Latentwärmespeicher (22) umschlossen wird, wobei die Außenwand (26) des zylindrischen Speicherbehälters (19) für Warmwasser von einem Körper (25) über einen Teil seiner Länge unter Bildung eines abgeschlossenen Zwischenraums (24) konzentrisch umschlossen wird, der Zwischenraum (24) zwischen der zylindrischen Außenwand des Speicherbehälters und dem Körper mit einem Phasenwechselmaterial (23) befüllt ist, **dadurch gekennzeichnet, dass** das Verhältnis zwischen dem Volumen des Speicherbehälters (19) für Warmwasser und dem Volumen des mit dem Phasenwechselmaterial (23) befüllten Zwischenraums (24) zwischen 3 und 6 liegt und dass der Körper hohlzylindrisch ist, wobei in dem unteren Abschnitt (27) des Speicherbehälters (19) für Warmwasser, der nicht von dem Latentwärmespeicher (22) umschlossen wird, eine mit einem abnehmbaren Deckel (21A) verschlossene Wartungsöffnung (21) vorgesehen ist, und der Latentwärmespeicher (22) eine Vorrichtung (30) zum Auslösen einer Kristallisation in dem Phasenwechselmaterial aufweist.

2. Warmwasserspeichersystem nach Anspruch 1, **dadurch gekennzeichnet, dass** der Latentwärmespeicher (22) zum Speichern von Solarenergie und der Speicherbehälter (19) für Warmwasser von einem einstückigen thermischen Isoliermantel vollständig umschlossen sind.

3. Warmwasserspeichersystem nach Anspruch 1 oder 2, **dadurch gekennzeichnet, dass** das Warmwasserspeichersystem einen Nachheizung-Wärmetauscher (10) für eine externe Nachheizung-Wärmequelle (7) aufweist, der einen Nachheizung-Vorlaufanschluss (10A) zum Zuführen eines Wärmeträgers von der externen Wärmequelle (7) und einen Nachheizung-Rücklaufanschluss (10B) zum Abführen des Wärmeträgers aufweist.

4. Warmwasserspeichersystem nach Anspruch 3, **dadurch gekennzeichnet, dass** der Solarwärme-Wärmetauscher (9) und der Nachheizung-Wärmetauscher (10) in dem Speicherbehälter (19) angeordnete Rohrwendel-Wärmetauscher sind.

5. Warmwasserspeichersystem nach einem der Ansprüche 1 bis 4, **dadurch gekennzeichnet, dass** das Verhältnis zwischen dem Volumen des Speicherbehälters (19) für Warmwasser und dem Volumen des mit dem Phasenwechselmaterial (23) befüllten Zwischenraums (24) zwischen 4 und 5 liegt.

6. Warmwasserversorgungsanlage mit einer thermischen Solaranlage (6) und einem Warmwasserspeichersystem (1) nach einem der Ansprüche 1 bis 5.

## Claims

1. Hot water storage system comprising a compression-proof hot water storage tank (19) which is a cylindrical pressure tank, a hot water supply connection (11A) and a hot water return connection (11B), a solar heat exchanger (9) for a thermal solar energy system (6), which heat exchanger has a heat transfer medium supply connection (9A) for supplying a heat transfer medium of the thermal solar energy system (6) and a heat transfer medium return connection (9B) for removing the heat transfer medium, a latent heat accumulator (22) surrounding the hot water storage tank (19) at least in part for storing solar energy in a phase change material (23), the latent heat accumulator concentrically surrounding the cylindrical pressure tank over at least one part of its length except for one lower portion (27), the hot water supply connection (11A), hot water return connection (11B), heat transfer medium supply connection (9A) and heat transfer medium return connection (9B) being arranged in the lower portion (27) of the hot water storage tank (19) which is not surrounded by the latent heat accumulator (22), the external wall (26) of the cylindrical hot water storage tank (19) being concentrically surrounded by a body (25) over at least one part of its length, thereby forming an enclosed space (24), the space (24) between the cylindrical external wall of the storage tank and the body being filled with a phase change material (23), **characterised in that** the ratio between the volume of the hot water storage tank (19) and the volume of the space (24) filled with the phase change material (23) is between 3 and 6 and **in that** the body is hollow cylindrical, a maintenance opening (21) closed by a detachable cover (21A) being provided in the lower portion (27) of the hot water storage tank (19) which is not surrounded by the latent heat accumulator (22), and the latent heat accumulator (22) having a device (30) for triggering crystallisation in the phase change material.

2. Hot water storage system according to claim 1, **characterised in that** the latent heat accumulator (22) for storing solar energy and the hot water storage tank (19) are completely surrounded by an integral thermal insulating jacket.

3. Hot water storage system according to claim 1 or 2, **characterised in that** the hot water storage system has a post-heating heat exchanger (10) for an external post-heating heat source (7), which post-heating heat exchanger has a post-heating supply connection (10A) for supplying a heat transfer medium from the external heat source (7) and a post-heating return connection (10B) for removing the heat transfer medium.

4. Hot water storage system according to claim 3, **characterised in that** the solar heat exchanger (9) and the post-heating heat exchanger (10) are coiled tubing heat exchangers arranged in the storage tank (19).

5. Hot water storage system according to any of claims 1 to 4, **characterised in that** the ratio between the volume of the hot water storage tank (19) and the volume of the space (24) filled with the phase change material (23) is between 4 and 5.

6. Hot water supply installation comprising a thermal solar energy system (6) and a hot water storage system (1) according to any of claims 1 to 5.

## Revendications

1. Système de stockage d'eau chaude avec
un récipient de stockage résistant à la pression (19) pour de l'eau chaude, qui est un récipient sous pression cylindrique,
un raccord d'arrivée d'eau chaude (11A) et un raccord de retour d'eau chaude (11B),
un échangeur thermique à chaleur solaire (9) pour une installation solaire thermique (6), qui comprend un raccord d'arrivée de fluide caloporteur (9A) pour l'introduction d'un fluide caloporteur provenant de l'installation solaire thermique (6) et un raccord de retour de fluide caloporteur (9B) pour l'évacuation du fluide caloporteur,
un accumulateur de chaleur latente (22) entourant au moins partiellement le récipient de stockage (19) pour de l'eau chaude, pour le stockage d'énergie solaire dans un matériau à changement de phase (23), l'accumulateur de chaleur latente entourant de manière concentrique le récipient sous pression cylindrique sur une partie de sa longueur, excepté une portion inférieure (27),
le raccord d'arrivée d'eau chaude (11A), le raccord de retour d'eau chaude (11B), le raccord d'arrivée de fluide caloporteur (9A) et le raccord de retour de fluide caloporteur (9B) étant disposés dans la portion inférieure (27) du récipient de stockage (19) pour eau chaude, qui n'est pas entourée par l'accumulateur de chaleur latente (22),
la paroi externe (26) du récipient de stockage cylindrique (19) pour eau chaude étant entourée de manière concentrique par un corps (25) sur une partie de sa longueur, en formant ainsi un espace intermédiaire fermé (24),
l'espace intermédiaire (24) étant rempli, entre la paroi externe cylindrique, du récipient de stockage et le corps, d'un matériau à changement de phase (23),
**caractérisé en ce que**
le rapport entre le volume du récipient de stockage (19) pour eau chaude et le volume de l'espace intermédiaire (24) rempli de matériau de changement de phase (23) se trouve entre 3 et 6 et **en ce que** le corps est cylindrique creux,
moyennant quoi, dans la portion inférieure (27) du récipient de stockage (19) pour eau chaude, qui n'est pas entourée par l'accumulateur de chaleur latente (22), est prévue une ouverture de maintenance (21) fermée par un couvercle amovible (21A) et l'accumulateur de chaleur latente (22) comprend un dispositif (30) pour le déclenchement d'une cristallisation dans le matériau à changement de phase.

2. Système de stockage d'eau chaude selon la revendication 1, **caractérisé en ce que** l'accumulateur de chaleur latente (22) pour le stockage de l'énergie solaire et le récipient de stockage (19) pour eau chaude sont entourés entièrement d'une enveloppe d'isolation thermique d'une seule pièce.

3. Système de stockage d'eau chaude selon la revendication 1 ou 2, **caractérisé en ce que** le système de stockage d'eau chaude comprend un échangeur thermique de réchauffage (10) pour une source de chaleur de réchauffage externe (7), qui comprend un raccord d'arrivée de réchauffage (10A) pour l'introduction d'un fluide caloporteur provenant de la source de chaleur externe (7) et un raccord de retour de réchauffage (10B) pour l'évacuation du fluide caloporteur.

4. Système de stockage d'eau chaude selon la revendication 3, **caractérisé en ce que** l'échangeur thermique à chaleur solaire (9) et l'échangeur thermique de réchauffage (10) sont des échangeurs thermiques à serpentins disposés dans le récipient de stockage (19).

5. Système de stockage d'eau chaude selon l'une des revendications 1 à 4, **caractérisé en ce que** le rapport entre le volume du récipient de stockage (19) pour eau chaude et le volume de l'espace intermédiaire (24) rempli de matériau à changement de phase (23) se trouve entre 4 et 5.

6. Installation d'alimentation en eau chaude avec une installation solaire thermique (6) et un système de stockage d'eau chaude (1) selon l'une des revendications 1 à 5.
